# EUROPÄISCHE PATENTANMELDUNG

(11) **EP 2 671 825 A1**
(43) Veröffentlichungstag der Anmeldung: **11.12.2013**
(21) Anmeldenummer: 13171289.5
(22) Anmeldetag: 10.06.2013
(51) Int. Cl.: B65G 47/30, B65G 47/84, B29C 49/42

(54) **Vorrichtung und Verfahren zum Transportieren von Behältnissen mit Teilungsverzug**

(30) Priorität: 08.06.2012 DE 102012104956
(71) Anmelder: Krones AG, 93073 Neutraubling (DE)
(72) Erfinder: Schwöd, Gerhard, 93073 Neutraubling (DE)
(74) Vertreter: Bittner, Bernhard

(57) **Zusammenfassung**

Eine Vorrichtung (1) zum Transportieren von Behältnissen (10) und insbesondere von Kunststoffbehältnissen (10) mit einer ersten bezüglich einer ersten Drehachse (D1) drehbaren Transporteinrichtung (2), welche eine Vielzahl von ersten Aufnahmeelementen (22) zum Aufnehmen der Behältnisse (10) aufweist, welche in einer Umfangsrichtung der ersten Transporteinrichtung (2) eine vorgegebene erste Teilung (T1) zueinander aufweisen. Erfindungsgemäß weist die Vorrichtung (1) eine bezüglich eines Transportpfades (P1, P2) der Behältnisse (10) der ersten Transporteinrichtung (2) nachgeordnete zweite Transporteinrichtung (4) auf, welche bezüglich einer zweiten Drehachse (D2) drehbar angeordnet ist, wobei die zweite Transporteinrichtung (4) eine Vielzahl von zweiten Aufnahmeelementen (42) zum Aufnehmen der Behältnisse aufweist, welche in einer Umfangsrichtung der zweiten Transporteinrichtung (4) eine zweite vorgegebene Teilung (T2) zueinander aufweisen, wobei sich eine Umfangsgeschwindigkeit der ersten Transporteinrichtung (2) und eine Umfangsgeschwindigkeit der zweiten Transporteinrichtung (4) voneinander unterscheiden, und sich bevorzugt die beiden Teilungen (T1, T2) voneinander unterscheiden, wobei die erste Transporteinrichtung (2) und die zweite Transporteinrichtung (4) in der Richtung der ersten Drehachse (D1) zueinander versetzt sind.

## Beschreibung

Die vorliegende Erfindung bezieht sich auf eine Vorrichtung zum Transportieren von Behältnissen und insbesondere von Kunststoffbehältnissen. Aus dem Stand der Technik sind die unterschiedlichsten Vorrichtungen zum Transportieren von Behältnissen bekannt, wie beispielsweise Luftförderer, Kettenförderer, Sägezahnsterne und dergleichen. Die Erfindung wird insbesondere unter Bezugnahme auf Kunststoffvorformlinge beschrieben, die im Rahmen des Herstellungsverfahrens zunächst erwärmt und anschließend durch Beaufschlagung mit Druckluft zu Kunststoffbehältnissen expandiert werden. Zu diesem Zweck laufen die Kunststoffvorformlinge zunächst in eine Erwärmungseinrichtung wie beispielsweise einen Infrarotofen ein.

Der Einlauf der Kunststoffvorformlinge in die jeweiligen Heizmodule (z.B. IR-Linearheizmodule und STIR-Heizmodule) erfolgt im Stand der Technik oftmals mittels eines Sägezahnsternes. Dieser Stern vereinzelt die Kunststoffvorformlinge und bringt sie auf einen definierten Abstand zueinander (im Folgenden als Teilung bezeichnet). Dieser Abstand entspricht dem Abstand der weiteren Behandlungsstation, d.h. beispielsweise dem Steuerkopf, dem Heizrad und dergleichen.

Vorteilhaft wird dabei die Teilung dieses Sägezahnsternes klein gewählt, weil dadurch die Umfangsgeschwindigkeit und damit die Höhe des Impulses, der den Kunststoffvorformling beschleunigt, am niedrigsten ist.

Um andererseits Heizeinrichtungen wie beispielsweise Stationen eines Mikrowellenofens auf einen geringeren Abstand zu bringen, damit diese ebenfalls mit einem Sägezahn bestückt werden können, hat sich eine Teilung im Bereich von 180 mm bis 200 mm als besonders günstig erwiesen. Diese relativ große Teilung hat jedoch negative Auswirkungen auf den Kunststoffvorformling, wie insbesondere eine hohe Umfangsgeschwindigkeit und einen hohen Impuls.

Der vorliegenden Erfindung liegt daher die Aufgabe zugrunde, den (bewährten und kostengünstigen) Einsatz von Sägezahnsternen auch bei höheren Produktionsraten zu ermöglichen bzw. zu erleichtern ohne gleichzeitig allzu hohe Impulse bzw. allzu hohe Umfangsgeschwindigkeiten der Kunststoffvorformlinge in Kauf nehmen zu müssen. Allgemein soll eine Möglichkeit zur Steigerung der Produktionsgeschwindigkeit geschaffen werden.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Transportieren von Behältnissen und insbesondere von Kunststoffbehältnissen weist eine erste bezüglich einer ersten Drehachse drehbare Transporteinrichtung auf, welche eine Vielzahl von ersten Aufnahmeelementen zum Aufnehmen der Behältnisse aufweist. Dabei weisen diese Aufnahmeelemente in einer Umfangsrichtung der ersten Transporteinrichtung eine vorgegebene erste Teilung zueinander auf.

Erfindungsgemäß weist die Vorrichtung eine bezüglich (bzw. entlang) des Transportpfades der Behältnisse der ersten Transporteinrichtung nachgeordnete zweite Transporteinrichtung auf, welche ebenfalls bezüglich einer zweiten Drehachse drehbar angeordnet ist. Dabei weist die zweite Transporteinrichtung eine Vielzahl von zweiten Aufnahmeelementen zum wenigstens teilweisen Aufnehmen der Behältnisse auf, wobei diese Aufnahmeelemente in einer Umfangsrichtung der zweiten Transporteinrichtung eine zweite vorgegebene Teilung zueinander aufweisen. Weiterhin unterscheiden sich eine Umfangsgeschwindigkeit der ersten Transporteinrichtung und eine Umfangsgeschwindigkeit der zweiten Transporteinrichtung voneinander und bevorzugt unterscheiden sich auch die beiden Teilungen voneinander. Weiterhin sind die erste Transporteinrichtung und die zweite Transporteinrichtung in der Richtung der ersten Drehachse zueinander versetzt.

Unter einer unterschiedlichen Umfangsgeschwindigkeit wird, wie allgemein üblich, die Geschwindigkeit der jeweiligen Transporteinrichtungen an ihrem Außenumfang verstanden. Damit entspricht diese Umfangsgeschwindigkeit im Wesentlichen der Transportgeschwindigkeit eines von dieser Transporteinrichtung transportierten Behältnisses.

Vorteilhaft handelt es sich bei diesen Transporteinrichtungen um scheibenartige Körper, die um ihre jeweiligen Drehachsen drehbar sind. Vorteilhaft sind die Aufnahmeelemente stationär an den jeweiligen Transporteinrichtungen ausgebildet. Bevorzugt ist wenigstens eine Transporteinrichtung als Sägezahnstern ausgebildet. Besonders bevorzugt sind beide Transporteinrichtungen als Sägezahnsterne bzw. Sägezahnräder ausgebildet.

Vorteilhaft unterscheiden sich, wie oben erwähnt, die Teilungen voneinander. Es wäre aber auch denkbar, dass die beiden Transporteinrichtungen bzw. deren Aufnahmeelemente die gleichen Teilungen aufweisen, aber beispielsweise bei der Übergabe der Behältnisse nur jedes n-te, beispielsweise nur jedes zweite Aufnahmeelement besetzt wird.

Bei einer weiteren vorteilhaften Ausführungsform sind die beiden Transporteinrichtungen insbesondere nicht höhengleich sondern höhenverschieden zueinander angeordnet.

Bei einer weiteren vorteilhaften Ausführungsform ist die Transporteinrichtung mit der niedrigeren Umfangsgeschwindigkeit in der Transportrichtung der Behältnisse vor der Transporteinrichtung mit der höheren Umfangsgeschwindigkeit angeordnet.

So ist es beispielsweise möglich, dass die Kunststoffbehältnisse bzw. die Kunststoffvorformlinge mittels der ersten Transporteinrichtung mit einer kleineren Teilung bzw. einer kleineren Umfangsgeschwindigkeit vereinzelt und auf eine kleine Teilung gebracht werden. Anschließend werden die Kunststoffbehältnisse bzw. die Kunststoffvorformlinge mittels der zweiten Transporteinrichtung auf eine höhere Teilung und/oder eine höhere Umfangsgeschwindigkeit gebracht. Vorteilhaft greift die erste Transporteinrichtung, welche bevorzugt als Sägezahnstern ausgeführt ist, unter einem Tragring des Kunststoffbehältnisses an. Bevorzugt greifen damit die erste und die zweite Transporteinrichtung die Behältnisse an unterschiedlichen Bereichen des Behältnisses bezogen auf dessen Längsrichtung an. Bei einer weiteren vorteilhaften Ausführungsform sind die Drehachsen der beiden Transporteinrichtungen parallel zueinander angeordnet. Bei einer weiteren vorteilhaften Ausführungsform übernimmt die zweite Transporteinrichtung die Behältnisse unmittelbar von der ersten, d.h. zwischen den beiden Transporteinrichtungen ist keine weitere Transport- oder Übergabeeinrichtung angeordnet.

Bevorzugt ist ein Abstand der beiden Transporteinrichtungen in Richtung der Drehachse bzw. der Drehachsen kleiner als 10 cm, bevorzugt kleiner als 5 cm, besonders bevorzugt kleiner als 3 cm.

Bei einer weiteren vorteilhaften Ausführungsform werden die Kunststoffbehältnisse von den beiden Transporteinrichtungen entlang einer Strecke transportiert, welche einen Umfangswinkel von weniger als 180°, bevorzugt von weniger als 150° entspricht. Dies bedeutet, dass die Strecke, entlang derer die Behältnisse von der einen oder der anderen und insbesondere der zweiten Transporteinrichtung transportiert werden, einen geringeren Umfangswinkel einschließt als 180°, bevorzugt einen geringeren Winkel als 150°, bevorzugt einen geringeren Winkel als 120°.

Bei einer weiteren vorteilhaften Ausführungsform sind die erste Transporteinrichtung und die zweite Transporteinrichtung entlang der ersten Drehachse überlappend angeordnet. Dies bedeutet, dass in bestimmten Bereichen, beobachtet entlang der Drehachse, sowohl die erste als auch die zweite Transporteinrichtung befindlich sind. Vorteilhaft sind in diesem Bereich die beiden Transporteinrichtungen übereinander angeordnet. Vorteilhaft sind die beiden Transporteinrichtungen wenigstens abschnittsweise und bevorzugt nur abschnittsweise übereinander angeordnet, also nicht genau bzw. direkt übereinander angeordnet.

Bei einer weiteren vorteilhaften Ausführungsform ist der Abstand der beiden Drehachsen der beiden Transporteinrichtungen geringer als die Summe der Radien der beiden Transporteinrichtungen, bevorzugt auch geringer als der Radius einer beliebigen der beiden Transporteinrichtungen.

Bei einer weiteren möglichen Ausführungsform weisen beide Transporteinrichtungen den gleichen Radius auf. Bevorzugt jedoch weist die zweite Transporteinrichtung einen geringeren Radius auf als die erste Transporteinrichtung. Bevorzugt liegt der Radius der zweiten Transporteinrichtung zwischen dem 0,5-fachen und dem 1,0-fachen, bevorzugt zwischen dem 0,6-fachen und dem 0,95-fachen und besonders bevorzugt zwischen dem 0,7-fachen und dem 0,95-fachen des Radius der ersten Transporteinrichtung.

Bei einer weiteren vorteilhaften Ausführungsform bewegen sich die beiden Transporteinrichtungen in einem Arbeitsbetrieb mit unterschiedlichen Umfangsgeschwindigkeiten. Vorteilhaft weisen die beiden Antriebseinrichtungen voneinander getrennte Antriebe auf, d.h. die Bewegung der beiden Transporteinrichtungen ist unabhängig voneinander steuerbar. Auf diese Weise ist es möglich, individuell den Teilungsverzug zwischen den beiden Transporteinrichtungen (zumindest abgestuft) einzustellen.

Bei einer weiteren vorteilhaften Ausführungsform sind die Aufnahmeelemente an einem Außenumfang der Transporteinrichtungen ausgebildete Ausnehmungen. Vorteilhaft ist radial außerhalb wenigstens einer Transporteinrichtung eine Führungseinrichtung vorgesehen, wobei die Behältnisse zwischen den Aufnahmeelementen und dieser Führungseinrichtung geführt wird. Diese Führungseinrichtung kann dabei eine die jeweilige Transporteinrichtung umgebende Wand sein.

Bei einer weiteren vorteilhaften Ausführungsform sind die erste Drehachse und die zweite Drehachse parallel zueinander und voneinander beabstandet. Bevorzugt ist daher unterhalb oder oberhalb und bevorzugt oberhalb der ersten Transporteinrichtung die zweite Transporteinrichtung, insbesondere ein weiterer Sägezahnstern angeordnet, der bevorzugt eine größere Teilung und besonders bevorzugt beispielsweise die halbe Zähneanzahl als der untere Sägezahn aufweist. Vorteilhaft rotiert diese zweite Transporteinrichtung doppelt so schnell wie die erste Transporteinrichtung.

Bei einer weiteren vorteilhaften Ausführungsform greift die zweite Transporteinrichtung an einem Gewinde oberhalb des Tragrings an.

Bei einer weiteren vorteilhaften Ausführungsform sind die beiden Transporteinrichtungen derart angeordnet, dass sich in einem Schnittpunkt der Teilkreise der beiden Transporteinrichtungen bzw. Sägezahnsterne ein Übergabepunkt ergibt, an dem die Kunststoffbehältnisse von der kleineren auf die größere Teilung gebracht werden. Dabei ist der Impuls auf den Kunststoffvorformling gering, weil er mit einer kleinen Teilung (d.h. Umfangsgeschwindigkeit) von 0 beschleunigt wird.

Bei der Übergabe an die zweite Transporteinrichtung bzw. den zweiten Transportstern mit der größeren Teilung wird der Kunststoffvorformling von einer bereits vorhandenen Umfangsgeschwindigkeit auf eine höhere Umfangsgeschwindigkeit beschleunigt und bevorzugt entsprechen die beiden Beschleunigungen einander im Wesentlichen bzw. unterscheiden sich bevorzugt um nicht mehr als 40% voneinander, bevorzugt um nicht mehr als 30% voneinander, besonders bevorzugt nicht mehr als 20% voneinander und besonders bevorzugt um nicht mehr als 10% voneinander.

Insgesamt wird daher der Kunststoffvorformling in zwei Stufen auf seine endgültige Teilung und Umfangsgeschwindigkeit gebracht, wobei jedoch die Beschleunigung bzw. der Impuls jeweils gering bleiben. Auf diese Weise kann gegenüber einem herkömmlichen Teilungsverzugsstern mit niedrigeren Kosten und einem einfacheren Aufbau gerechnet werden.

Bei einer weiteren vorteilhaften Ausführungsform ist ein Verhältnis zwischen der zweiten Teilung der Aufnahmeelemente der zweiten Transporteinrichtung und der ersten Teilung der Aufnahmeelemente der ersten Transporteinrichtung ganzzahlig. Bevorzugt sind entsprechend auch die Umfangsgeschwindigkeiten bzw. Transportgeschwindigkeiten der beiden Transporteinrichtungen unterschiedlich und stehen bevorzugt zueinander in einem ganzzahligen Verhältnis.

Bei einer weiteren vorteilhaften Ausführungsform drehen sich beide Transporteinrichtungen in der gleichen Richtung, also entweder beide Transporteinrichtungen im Uhrzeigersinn oder beide Transporteinrichtungen entgegen dem Uhrzeigersinn. Es wäre jedoch auch möglich, dass die beiden Transporteinrichtungen nebeneinander, jedoch höhenversetzt, angeordnet sind und sich dann jedoch mit entgegengesetzten Drehrichtungen drehen.

Bevorzugt sind die beiden Drehachsen der Transporteinrichtung in kürzerem Abstand zueinander angeordnet als der Radius einer der beiden Transporteinrichtungen. Je kürzer der Abstand dieser beiden Drehachsen ist, desto geringer weichen an den Übergabestellen die Transportrichtungen der Kunststoffbehältnisse voneinander ab. Hierbei kann davon ausgegangen werden, dass die Behältnisse vor der Übergabestelle von der ersten Transporteinrichtung in einer Richtung transportiert werden, die durch eine Tangente an die erste Transporteinrichtung gegeben ist. Unmittelbar nach dem Übergabepunkt werden die Behältnisse in einer Richtung transportiert, welche durch die Tangente an die zweite Transporteinrichtung definiert ist. Man wird also bestrebt sein, an dem Übergabepunkt eine nur möglichst geringe Bewegungsänderung zu haben. Auf der anderen Seite muss jedoch auch sichergestellt sein, dass an dem Übergabepunkt der Behältnisse an die erste Transporteinrichtung und dem Übergabepunkt der Behältnisse von der zweiten Transporteinrichtung weg die jeweils andere Transporteinrichtung die Übergabe nicht stören kann. Dieses zweite Kriterium legt den minimalen Abstand zwischen den beiden Drehachsen fest.

Bei einer weiteren vorteilhaften Ausführungsform werden die Kunststoffbehältnisse nach der zweiten Transporteinrichtung von einer weiteren Transporteinrichtung übernommen, welche die Kunststoffbehältnisse vereinzelt führt. Bei dieser weiteren Transporteinrichtung kann es sich beispielsweise um eine Transportkette handeln, welche die Kunststoffbehältnisse in Form von Kunststoffvorformlingen durch einen Ofen transportiert. Dabei ist es möglich, dass diese weitere Transporteinrichtung eine Vielzahl von Haltelementen aufweist, welche die Behältnisse jeweils halten. Vorteilhaft sind dabei diese Haltelemente als Haltedorne ausgeführt, welche in die Mündungen der Kunststoffvorformlinge eingreifen können.

Bei einer weiteren vorteilhaften Ausführungsform werden die Kunststoffbehältnisse der ersten Transporteinrichtung nicht vereinzelt, sondern bevorzugt einander berührend, zugeführt. Damit dient die erste Transporteinrichtung auch zum Vereinzeln der Kunststoffvorformlinge bzw. wie oben erwähnt zum Herstellen der ersten Teilung.

Bei einer weiteren vorteilhaften Ausführungsform sind die Transporteinrichtungen derart angeordnet, dass die zweite Transporteinrichtung die Behältnisse unmittelbar von der ersten Transporteinrichtung übernimmt. Es sind daher, wie oben erwähnt, auch bei dieser Ausgestaltung keine weiteren Zwischenförderer oder Zwischentransporteinrichtungen angeordnet.

Bei einer weiteren besonders bevorzugten Ausführungsform weist die Vorrichtung eine erste Antriebseinrichtung zum Antreiben der ersten Transporteinrichtung auf, sowie eine zweite Antriebseinrichtung zum Antreiben der zweiten Transporteinrichtung und beide Transporteinrichtungen sind in einer Richtung entlang ihrer Drehachsen zwischen diesen Antrieben angeordnet. Auf diese Weise ist es möglich, dass die beiden Transporteinrichtungen in einem sehr geringen Abstand zueinander gehalten werden können. Bevorzugt sind die beiden Antriebseinrichtungen unabhängig voneinander steuerbar. Vorzugsweise sind die Antriebseinrichtungen jedoch derart gesteuert, dass sich zumindest an dem Übergabepunkt stets ein Aufnahmeelement der ersten Transporteinrichtung und auch ein Aufnahmeelement der zweiten Transporteinrichtung befinden.

Bei einer weiteren vorteilhaften Ausführungsform weist die Vorrichtung eine Getriebeeinrichtung auf, welche die Drehung der ersten Transporteinrichtung und die Drehung der zweiten Transporteinrichtung miteinander koppelt. Bei dieser Ausführungsform ist bevorzugt nur eine Antriebseinrichtung zum Antreiben einer der beiden Transporteinrichtungen vorgesehen und die besagte Getriebeeinrichtung bewirkt, dass die Drehung der anderen Transporteinrichtung mit einem vorgegebenen Drehzahlverhältnis an die Drehung der erstgenannten Transporteinrichtung gekoppelt ist.

Vorteilhaft weist die Getriebeeinrichtung ein Planetengetriebe auf. Vorteilhaft weist daher die Getriebeeinrichtung wenigstens ein Hohlrad, insbesondere ein Hohlzahnrad auf.

Die vorliegende Erfindung ist weiterhin auf ein Verfahren zum Transportieren von Behältnissen und insbesondere von Kunststoffbehältnissen gerichtet. Dabei werden die Behältnisse mittels einer ersten um eine vorgegebene erste Drehachse drehbaren Transporteinrichtung entlang eines ersten kreisförmigen Transportpfades transportiert und die erste Transporteinrichtung weist eine Vielzahl von Aufnahmeelementen zum Aufnehmen der Behältnisse auf, wobei diese Aufnahmeelemente in einer Umfangsrichtung der ersten Transporteinrichtung eine vorgegebene erste Teilung zueinander aufweisen. Weiterhin werden die Behältnisse unmittelbar nach dem Transport mit der ersten Transporteinrichtung von einer zweiten um eine zweite vorgegebene Drehachse drehbare Transporteinrichtung übernommen und mittels dieser zweiten Transporteinrichtung entlang eines zweiten kreisförmigen Transportpfades transportiert, wobei die zweite Transporteinrichtung eine Vielzahl von zweiten Aufnahmeelementen zum Aufnahmen der Behältnisse aufweist und diese zweiten Aufnahmeelemente in einer Umfangsrichtung der zweiten Transporteinrichtung eine vorgegebene zweite Teilung zueinander aufweisen.

Erfindungsgemäß unterscheiden sich die Umfangsgeschwindigkeiten der Transporteinrichtungen voneinander.

Vorteilhaft ist dabei die Umfangsgeschwindigkeit der ersten Transporteinrichtung geringer als die Umfangsgeschwindigkeit der zweiten Transporteinrichtung.

Dies bedeutet, dass auch verfahrensseitig eine Beschleunigung der Behältnisse in zwei Stufen erfolgt und auf diese Weise zwar einerseits mit hohen Arbeitsgeschwindigkeiten gearbeitet werden kann, andererseits jedoch allzu große Beschleunigungen bzw. Impulse auf die Behältnisse verhindert werden können.

Bei einem weiteren vorteilhaften Verfahren kontaktieren die beiden Transporteinrichtungen die Behältnisse an in einer Längsrichtung der Behältnisse zueinander versetzten Höhenabschnitten. Bevorzugt kontaktieren in einem Übergabepunkt beide Transporteinrichtungen die zu übergebenden Behältnisse.

Bei einem weiteren vorteilhaften Verfahren ist eine Drehrichtung beider Transporteinrichtungen identisch.

Bevorzugt kontaktieren beide Transporteinrichtungen die Behältnisse zu deren Transport in einem Bereich der Mündung beispielsweise die erste Transporteinrichtung unterhalb eines Tragrings und die zweite Transporteinrichtung oberhalb des Tragrings und beispielsweise unterhalb eines Gewindebereiches. Bei einer weiteren vorteilhaften Ausführungsform berühren die beiden Transporteinrichtungen die Behältnisse in deren Umfangsrichtung in Bereichen, die voneinander um weniger als 150°, bevorzugt um weniger als 120°, bevorzugt um weniger als 90° und besonders bevorzugt um weniger als 60° beabstandet sind.

Dies bedeutet, dass die Behältnisse von beiden Transporteinrichtungen von der gleichen Seite her kontaktiert werden. Bei einem weiteren vorteilhaften Verfahren unterscheiden sich auch die Teilungen zwischen den Aufnahmeelementen der einzelnen Transporteinrichtungen. Bevorzugt werden jedoch die Behältnisse von beiden Transporteinrichtungen vereinzelt, also mit Abstand zueinander, transportiert.

Weitere Vorteile und Ausführungsformen ergeben sich aus den beigefügten Zeichnungen. Darin zeigen:
- Fig. 1: eine Darstellung zur Veranschaulichung der Übergabe der Behältnisse von einer an die andere Transporteinrichtung;
- Fig. 2: eine Ansicht der Vorrichtung aus Figur 1 entlang der Linie A - A aus Figur 1;
- Fig. 3: eine perspektivische Ansicht der in Figur 1 gezeigten Vorrichtung; und
- Fig. 4: eine weitere Ausführungsform einer erfindungsgemäßen Vorrichtung

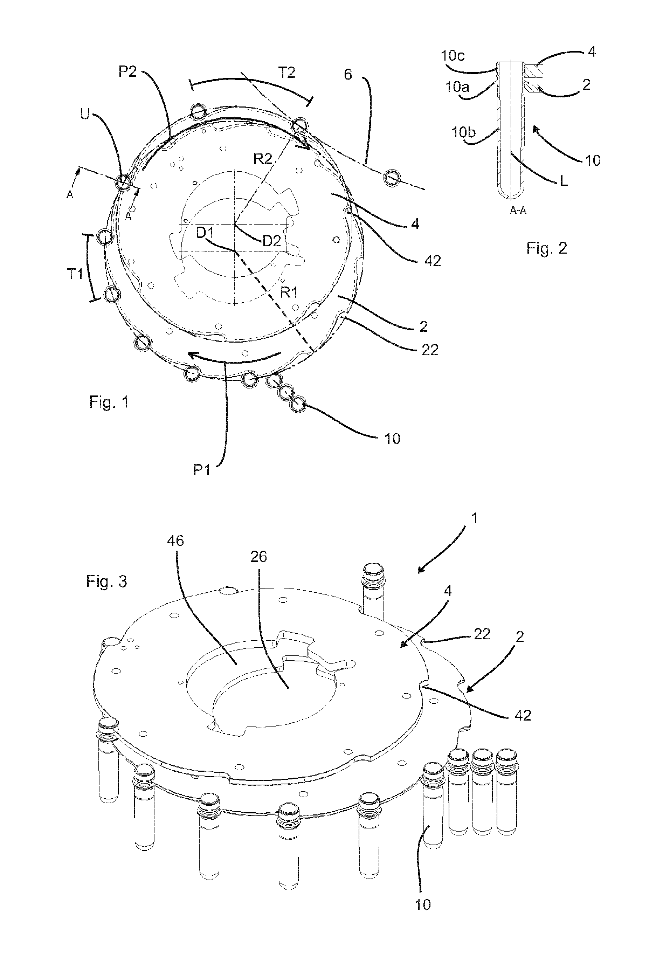

Figur 1 zeigt eine Draufsicht auf eine erfindungsgemäße Vorrichtung. Man erkennt hier zunächst die erste Transporteinrichtung 2, die sich hier im Uhrzeigersinn um eine Drehachse D1 dreht. Der Pfeil P1 kennzeichnet damit den ersten Transportpfad von Kunststoffvorformlingen 10, die dieser ersten Transporteinrichtung 2 zugeführt werden.

Die Transporteinrichtung 2 weist an ihrem Außenumfang eine Vielzahl von Ausnehmungen 22 auf, welche jeweils als Mitnehmer für die einzelnen Kunststoffvorformlinge 10 dienen. Daneben ist auch eine Führungseinrichtung (nicht gezeigt) angeordnet, welche radial außerhalb der ersten Transporteinrichtung angeordnet ist und ein Herabfallen der Kunststoffvorformlinge verhindert.

Man erkennt, dass die einzelnen Aufnahmeelemente eine erste Teilung T1 zueinander aufweisen. Das Bezugszeichen R1 bezieht sich auf einen Radius der ersten Transporteinrichtung.

Das Bezugszeichen 4 kennzeichnet eine zweite Transporteinrichtung, die hier oberhalb, jedoch versetzt gegenüber der ersten Transporteinrichtung 2, angeordnet ist. Man erkennt, dass die Drehachse D2 der zweiten Transporteinrichtung 4 gegenüber der ersten Drehachse D1 der ersten Transporteinrichtung 2 versetzt ist. Die zweite Transporteinrichtung 4 weist einen zweiten Radius R2 auf, der hier etwas geringer ist als der Radius R1 der ersten Transporteinrichtung. Bevorzugt unterscheiden sich jedoch der Radius der ersten Transporteinrichtung R1 und der Radius R2 der zweiten Transporteinrichtung um weniger als 80%, bevorzugt um weniger als 50% und besonders bevorzugt um weniger als 30% voneinander.

Die zweite Transporteinrichtung 4 weist ebenfalls eine Vielzahl von Aufnahmeelementen 42 auf, die bevorzugt in ähnlicher Weise gestaltet sind wie die Aufnahmeelemente 22 der ersten Transporteinrichtung, die jedoch hier eine Teilung T2 zueinander aufweisen, die größer ist als die Teilung T1. In dem in Figur 1 gezeigten Beispiel ist die Teilung T2 doppelt so groß wie die Teilung T1 der Aufnahmeelemente der ersten Transporteinrichtung. Entsprechend werden die Behältnisse ab dem Übergabepunkt von der zweiten Transporteinrichtung weiter gefördert. Im Anschluss können die Behältnisse von einer weiteren Transporteinrichtung 6 (hier nur schematisch dargestellt) übernommen werden. Das Bezugszeichen P2 kennzeichnet den zweiten Transportpfad bzw. Transportpfadabschnitt.

Figur 2 zeigt eine Ansicht eines Behältnisses entlang der Linie A-A aus Figur 1. Damit ist hier die Situation in dem Übergabepunkt U (vgl. Fig. 1) dargestellt. Man erkennt, dass in diesem Punkt sowohl die erste Transporteinrichtung 2 als auch die zweite Transporteinrichtung 4 an dem Kunststoffvorformling 10 anliegen. Bei dem Weitertransport entfernt sich nunmehr die erste Transporteinrichtung 2 aufgrund der Tatsache, dass die Drehachsen der beiden Transporteinrichtungen voneinander versetzt sind. Andererseits liegt die zweite Transporteinrichtung 4 vor dem Übergabepunkt U noch nicht an dem Behältnis an. Das Bezugszeichen L kennzeichnet die Längsrichtung des Kunststoffbehältnisses bzw. Kunststoffvorformlings.

Bei der hier gezeigten Ausführungsform ist die zweite Transporteinrichtung 4 damit oberhalb der ersten Transporteinrichtung 2 angeordnet. Es wäre jedoch auch umgekehrt möglich, dass die zweite Transporteinrichtung 4 unterhalb der ersten Transporteinrichtung 2 angeordnet ist. Das Bezugszeichen 10a kennzeichnet einen Tragring des Kunststoffvorformlings, unterhalb dessen die erste Transporteinrichtung 2 eingreift. Das Bezugszeichen 10b kennzeichnet einen Grundkörper des Kunststoffvorformlings und das Bezugszeichen 10c einen Mündungsbereich, der ab dem Übergabepunkt von der zweiten Transporteinrichtung 4 kontaktiert wird.

Figur 3 zeigt eine perspektivische Sicht auf eine erfindungsgemäße Vorrichtung 1. Man erkennt hier wieder, dass die Kunststoffvorformlinge 10 in einer Reihe in der sie aneinander liegen der ersten Transporteinrichtung 2 zugeführt werden und jeweils in den einzelnen Ausnehmungen 22 einliegen. Die Ausnehmungen 22 weisen dabei eine asymmetrische Form auf bzw. in der Transportrichtung eine zunächst sehr steil abfallende Mulde, die sich erst langsam wieder dem Radius R annähert. Auf diese Weise kann verhindert werden, dass sich die beiden Transporteinrichtungen 2 kurz vor und nach der Übergabe des Kunststoffvorformlings gegenseitig behindern.

Die Mulden der Transporteinrichtungen sind vorteilhaft derart gestaltet, dass die höchste Erhebung maximal dem Teilkreis des "Sägezahnsternes" entspricht und somit den Preform nur bis zu dessen Mitte berührt. Der tiefste Punkt der Mulde ist bevorzugt mit der höchsten Erhebung der nächsten Mulde tangential (insbesondere mit einem Kreisbogen) verbunden, der sich aus den Durchmessern unterhalb bzw. oberhalb des Tragringes des Preforms und der Teilung des Sternes ergibt. Somit ergibt sich vorteilhaft eine sägezahnähnliche Kontur. Der Preform liegt in der Mulde und wird so in einem definierten Abstand entlang des Teilkreises bewegt.

Das Bezugszeichen 26 kennzeichnet eine Öffnung der ersten Transporteinrichtung 2 und das Bezugszeichen 46 eine Öffnung der zweiten Transporteinrichtung 4. In diese Öffnungen können jeweils Antriebselemente von unten bzw. oben eingreifen, so dass auf diese Weise ein geringer Abstand zwischen den beiden Transporteinrichtungen gewährleistet wird. Man erkennt, dass die beiden Transporteinrichtungen 2 und 4 jeweils als scheibenartige Körper ausgeführt sind. Es wäre zusätzlich möglich, dass zwischen diesen beiden Transporteinrichtungen Lagerelemente, etwa in der Art eines Kugellagers, angeordnet sind, so dass ein genau definierter Abstand zwischen den beiden Transporteinrichtungen gewährleistet ist.

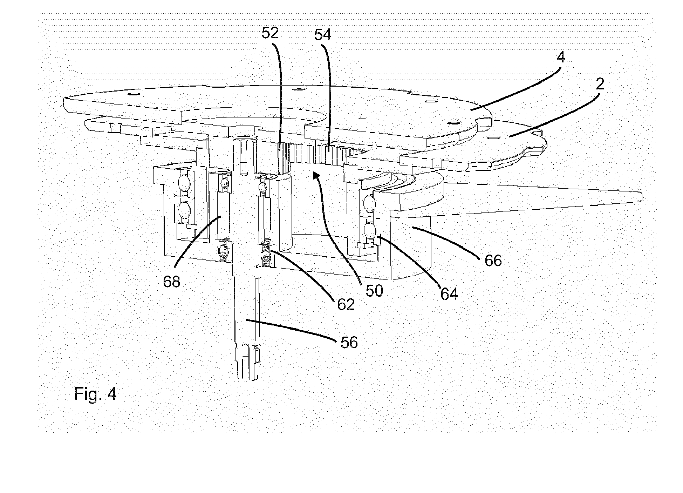

Fig. 4 zeigt eine weitere Ausführungsform der vorliegenden Erfindung. Bei dieser Ausführungsform ist eine in ihrer Gesamtheit mit 50 bezeichnete Getriebeeinrichtung vorgesehen, welche die Drehbewegung der ersten Transporteinrichtung 2 und die Drehbewegung der zweiten Transporteinrichtung 4 miteinander koppelt.

Bei dieser Ausführungsform ist eine Antriebswelle 56 vorgesehen, welche die zweite Transporteinrichtung 4 unmittelbar und daher auch übersetzungsfrei antreibt (es könnte jedoch auch die erste Transporteinrichtung unmittelbar angetrieben werden). Weiterhin treibt die Antriebswelle 56 auch ein Antriebszahnrad 52 unmittelbar an, welches wiederum mit dem Hohlrad 54 ineinander greift und dieses antreibt. Aus den Zahnzahlen dieses Antriebsrads 52 bzw. des Hohlrads 54 bzw. deren Verhältnis ergibt sich auch das Drehzahlverhältnis der beiden Transporteinrichtungen 2 und 4.

Das Bezugszeichen 66 kennzeichnet einen (stationären) Träger zum Lagern der beiden Transporteinrichtungen 2, 4. An diesem Träger 66 ist fest (vorteilhaft einteilig mit diesem ausgebildet) eine Lagereinrichtung 68 angeordnet, welche zur Lagerung der Antriebswelle 56 bzw. der zweiten Transporteinrichtung 4 dient. Das Bezugszeichen 62 kennzeichnet entsprechende Lagerelemente wie beispielsweise Kugellager. Mittels weiterer Lagerelemente 64 wird die Drehbewegung der ersten Transporteinrichtung 2 und auch des Hohlrads 54 gegenüber der Lagereinrichtung 66 ermöglicht.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: erste Transporteinrichtung
- 4: zweite Transporteinrichtung
- 6: Transporteinrichtung
- 10: Kunststoffvorformlinge
- 10a: Tragring (des Kunststoffvorformlings)
- 10b: Grundkörper (des Kunststoffvorformlings)
- 10c: Mündungsbereich
- 22, 42: Ausnehmungen, Aufnahmeelemente
- 26: Öffnung (der ersten Transporteinrichtung 2)
- 46: Öffnung (der zweiten Transporteinrichtung 4)
- 50: Getriebeeinrichtung
- 52: Antriebsrad
- 54: Hohlrad
- 56: Antriebswelle
- 62, 64: Lagerelemente
- 66: Träger
- 68: Lagereinrichtung
- D1: erste Drehachse
- D2: zweite Drehachse
- P1: erster Transportpfad(abschnitt)
- P2: zweiter Transportpfad(abschnitt)
- R1: Radius
- R2: Radius
- T1: erste Teilung
- T2: zweite Teilung
- U: Übergabepunkt

## Patentansprüche

1. Vorrichtung (1) zum Transportieren von Behältnissen (10) und insbesondere von Kunststoffbehältnissen (10) mit einer ersten bezüglich einer ersten Drehachse (D1) drehbaren Transporteinrichtung (2), welche eine Vielzahl von ersten Aufnahmeelementen (22) zum Aufnehmen der Behältnisse (10) aufweist, welche in einer Umfangsrichtung der ersten Transporteinrichtung (2) eine vorgegebene erste Teilung (T1) zueinander aufweisen,
**dadurch gekennzeichnet, dass**
die Vorrichtung (1) eine bezüglich eines Transportpfades (P1, P2) der Behältnisse (10) der ersten Transporteinrichtung (2) nachgeordnete zweite Transporteinrichtung (4) aufweist, welche bezüglich einer zweiten Drehachse (D2) drehbar angeordnet ist, wobei die zweite Transporteinrichtung (4) eine Vielzahl von zweiten Aufnahmeelementen (42) zum Aufnehmen der Behältnisse aufweist, welche in einer Umfangsrichtung der zweiten Transporteinrichtung (4) eine zweite vorgegebene Teilung (T2) zueinander aufweisen, wobei sich eine Umfangsgeschwindigkeit der ersten Transporteinrichtung (2) und eine Umfangsgeschwindigkeit der zweiten Transporteinrichtung (4) voneinander unterscheiden, und sich bevorzugt die beiden Teilungen (T1, T2) voneinander unterscheiden, wobei die erste Transporteinrichtung (2) und die zweite Transporteinrichtung (4) in der Richtung der ersten Drehachse (D1) zueinander versetzt sind.

2. Vorrichtung (1) nach Anspruch 1,
**dadurch gekennzeichnet, dass**
die erste Transporteinrichtung (2) und die zweite Transporteinrichtung (4) entlang der ersten Drehachse (D1) überlappend angeordnet sind.

3. Vorrichtung (1) nach wenigstens einem der vorangegangenen Ansprüche,
**dadurch gekennzeichnet, dass**
die Aufnahmeelemente (22, 42) an einem Außenumfang der Transporteinrichtungen (2, 4) ausgebildete Ausnehmungen (22, 42) sind.

4. Vorrichtung (1) nach wenigstens einem der vorangegangenen Ansprüche,
**dadurch gekennzeichnet, dass**
die erste Drehachse (D1) und die zweite Drehachse (D2) parallel zueinander und voneinander beabstandet sind.

5. Vorrichtung (1) nach wenigstens einem der vorangegangenen Ansprüche,
**dadurch gekennzeichnet, dass**
ein Verhältnis zwischen der zweiten Teilung (T2) der Aufnahmeelemente (42) der zweiten Transporteinrichtung (4) und der ersten Teilung (T1) der Aufnahmeelemente (22) der ersten Transporteinrichtung (2) ganzzahlig ist.

6. Vorrichtung (1) nach wenigstens einem der vorangegangenen Ansprüche,
**dadurch gekennzeichnet, dass**
die Transporteinrichtungen (2, 4) derart angeordnet sind, dass die zweite Transporteinrichtung (4) die Behältnisse (10) unmittelbar von der ersten Transporteinrichtung (2) übernimmt.

7. Vorrichtung (1) nach wenigstens einem der vorangegangenen Ansprüche,
**dadurch gekennzeichnet, dass**
die Vorrichtung (1) eine erste Antriebseinrichtung zum Antreiben der ersten Transporteinrichtung (2) aufweist sowie eine zweite Antriebseinrichtung zum Antreiben der zweiten Transporteinrichtung (4) und beide Transporteinrichtungen (2, 4) in einer Richtung entlang der Drehachse (D1) zwischen diesen Antrieben angeordnet sind.

8. Vorrichtung (1) nach Anspruch 1,
**dadurch gekennzeichnet, dass**
die Vorrichtung (1) eine Getriebeeinrichtung (50) aufweist, welche die Drehung der ersten Transporteinrichtung (2) und die Drehung der zweiten Transporteinrichtung (4) miteinander koppelt.

9. Vorrichtung (1) nach Anspruch 8,
**dadurch gekennzeichnet, dass**
die Getriebeeinrichtung (50) ein Planetengetriebe (52, 54) aufweist.

10. Verfahren zum Transportieren von Behältnissen (10), wobei die Behältnisse (10) mittels einer ersten um eine vorgegebene erste Drehachse (D1) drehbaren Transporteinrichtung (2) entlang eines ersten kreisförmigen Transportpfads (P1) transportiert werden, wobei die erste Transporteinrichtung (2) eine Vielzahl von ersten Aufnahmeelementen (22) zum Aufnehmen der Behältnisse (10) aufweist und diese Aufnahmeelemente (22) in einer Umfangsrichtung der ersten Transporteinrichtung (2) eine vorgegebene erste Teilung (T1) zueinander aufweisen, wobei die Behältnisse (10) unmittelbar nach dem Transport mit der ersten Transporteinrichtung (2) von einer zweiten um eine zweite vorgegebene Drehachse (D2) drehbaren Transporteinrichtung (4) übernommen werden und mittels dieser zweiten Transporteinrichtung (4) entlang eines zweiten kreisförmigen Transportpfades (P2) transportiert werden, wobei die zweite Transporteinrichtung (4) eine Vielzahl von zweiten Aufnahmeelementen (42) zum Aufnehmen der Behältnisse (10) aufweist und diese zweiten Aufnahmeelemente (42) in einer Umfangsrichtung der zweiten Transporteinrichtung (4) eine vorgegebene zweite Teilung (T2) zueinander aufweisen
**dadurch gekennzeichnet, dass**
sich die Umfangsgeschwindigkeiten der beiden Transporteinrichtungen (2, 4) voneinander unterscheiden.

11. Verfahren nach Anspruch 10,
**dadurch gekennzeichnet, dass**
die beiden Transporteinrichtungen (2, 4) die Behältnisse (10) an in einer Längsrichtung (L) der Behältnisse (10) zueinander versetzten Höhenabschnitten kontaktieren.
